# EUROPEAN PATENT SPECIFICATION

(11) **EP 0 459 801 B1**
(45) Date of publication and mention of the grant of the patent: **06.08.1997**
(21) Application number: 91304893.0
(22) Date of filing: 30.05.1991
(51) Int. Cl.: C08G 73/10

(54) **Readily processable polyimide and preparation process of same**
Leicht zu verarbeitende Polyimide und deren Herstellung
Polyimides faciles à travailler et procédé pour leur préparation

(30) Priority: 01.06.1990 JP 141274/90; 27.06.1990 JP 166634/90; 27.06.1990 JP 166637/90; 18.07.1990 JP 187885/90; 26.07.1990 JP 196374/90
(43) Date of publication of application: 04.12.1991
(60) Divisional application: 95116675.0
(73) Proprietor: MITSUI TOATSU CHEMICALS, Inc., Chiyoda-Ku Tokyo 100 (JP)
(72) Inventor: Tamai, Shoji, Yokohama-shi, Kanagawa-ken, 247 (JP); Yamaguchi, Akihiro, Kamakura-shi, Kanagawa-ken, 248 (JP); Ohta, Masahiro, Yokohama-shi, Kanagawa-ken, 244 (JP)
(74) Representative: Rackham, Anthony Charles

(56) References cited:
- EP-A- 0 283 835
- EP-A- 0 299 865
- EP-A- 0 349 720
- EP-A- 0 350 203
- US-A- 4 855 391
- US-A- 4 910 288
- Encyclopedia of Polymer Science and Engineering, vol. 12, John Wiley & Sons, New York 1988, page 375

## Description

The present invention relates to a polyimide used for melt-processing, and more particularly relates to a polyimide having an excellent processability, and to a process for preparing the same.

Polyimide obtained by reacting tetracarboxylic dianhydride with diamine has very high heat-resistance and is additionally excellent in mechanical strength, dimensional stability, flame retardancy and electrical insulation. On account of such favorable performance, polyimide has been conventionally used in the field of electric and electronic apparatus, space and aeronautic equipment and transportation machinery. Thus, polyimide is a functional resin which is expected for wide use in the field where heat resistance is required. Required performance and application methods are diversified accompanied by the extension of field for use. Various kinds of polyimide having excellent characteristics have been developed to meet these demands.

Some polyimides, however, have no definite glass transition temperature, even though they have excellent heat resistance. Consequently, the polyimide must be processed by such means as sinter moulding, when it is used as a moulding material. Other kinds of polyimide are soluble in solvents such as halogenated hydrocarbons, even though excellent in processability, and have a disadvantage in solvent resistance. Thus, the conventionally developed polyimide has both merits and drawbacks in its performance.

Conventionally known polyimide has commonly been difficult to process. These kinds of polyimide are thermosetting resin. Hence it is difficult to apply a melt-processing method which can operate with ease and a specific processing method such as sintering must be employed.

For example, polyimide prepared from pyromellitic dianhydride and 4,4'-diaminodiphenyl ether and having a fundamental skeleton of the following repeating formula : 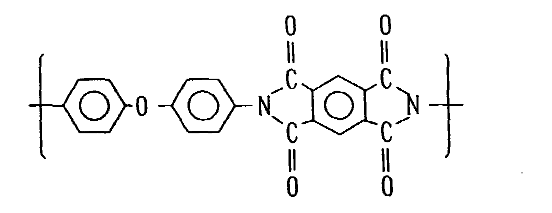 has no distinct glass transition temperature and is difficult to process as a moulding material, though excellent in heat resistance. It has been well known that the polyimide must be processed by means of sintering.

Another polyimide obtained by reacting pyromellitic dianhydride with 1,4-bis(4-aminophenoxy)benzene has been known for a long time as disclosed in SU-188,005. The polyimide, however, exhibits no melt-flowability at all at 450 °C and is quite difficult to process in molten state.

Further, polyimide prepared from 3,3',4,4'-diphenylethertetracarboxylic dianhydride and 1,4-bis(4-aminophenoxy)benzene has been disclosed in USP 4,855,391 and EP-A-0 283,835. However, no description has been found at all on the melt-flowability and injection moulding of the polyimide.

EP-A-0 349 720 describes inter alia polyetherimides consisting essentially of chemically combined groups of the formula 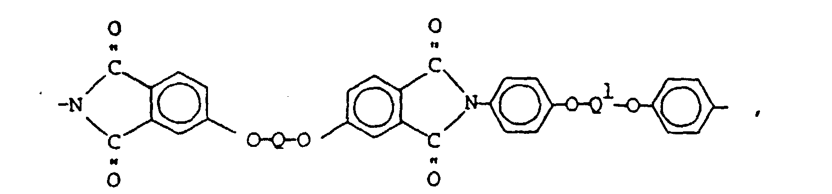 where Q and Q¹ are the same or different divalent aromatic groups having the formula,

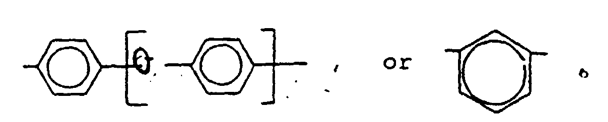

Therefore, in order to extend utilization of polyimide in the field where excellent properties of polyimide can be applied, particularly in the high technology field, it is extremely important to find out polyimide having a specific structure which can be melt processed while maintaining the various excellent characteristics of polyimide.

An object of the present invention is to provide polyimide having excellent processability, good chemical resistance and outstanding transparency in addition to an excellent heat resistance which is an essential characteristic of polyimide.

Accordingly, one aspect of the present invention is a polyimide obtained by blocking the chain end of a polymer molecule with a divalent aromatic group derived from phthalic anhydride, the polyimide comprising a recurring structural unit represented by the formula (II): 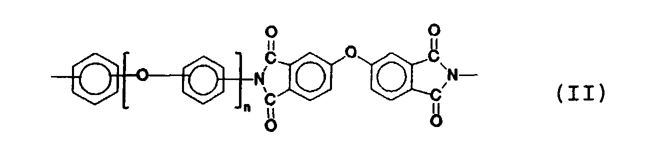 in which n is 1 or 2,
with the exception of polyimide where the structural units of the above formula are exclusively those of the formula:

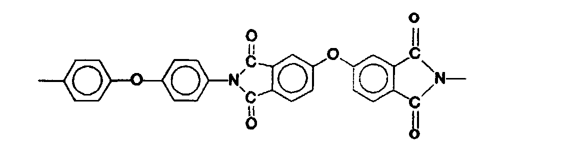

According to one preferred embodiment a melt-processable polyimide is obtained by blocking the chain end of a polymer molecule with a divalent aromatic group derived from phthalic anhydride, the polyimide comprising 2 or more recurring structural units which are a mixture of a recurring structural unit represented by the formula III and/or a recurring structural unit represented by the formula VI with a recurring structural unit represented by the formula V and/or a recurring structural unit represented by the formula VI: 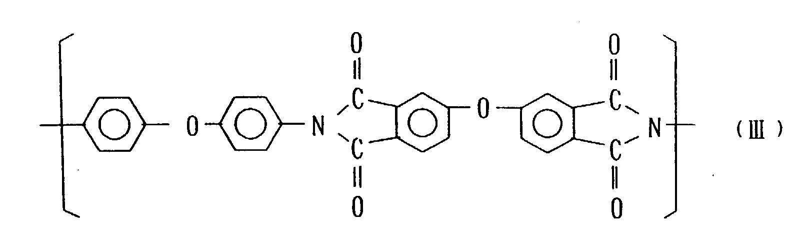 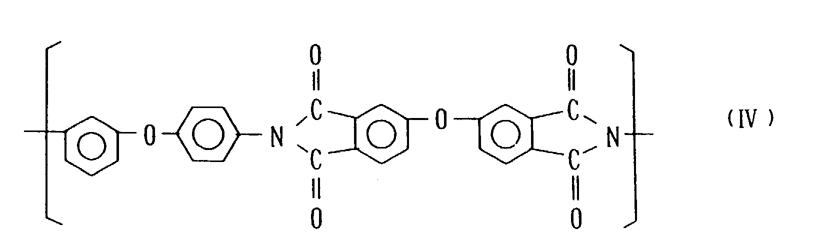 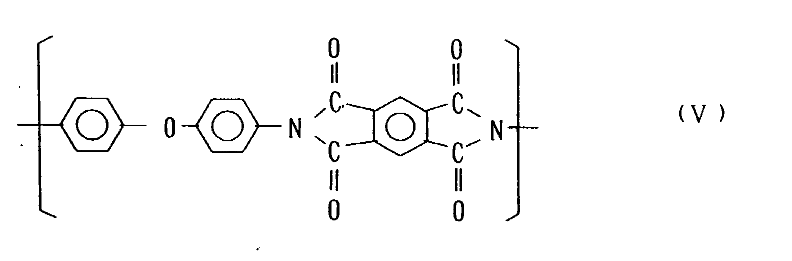 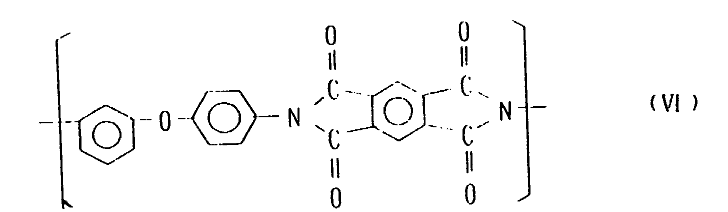 the proportion of a recurring unit represented by the formula V and/or a recurring structural unit represented by the formula VI being from 0.05 to 1.0 mole per mole of a recurring structural unit represented by the formula III and/or a recurring structural unit represented by the formula IV. Such a polyimide will hereinafter be referred to as "copolyimide".

The invention also extends to a process for the preparation of a readily processable polyimide in which a single diamine, or a mixture of the diamines, having the formulae VIII and IX: 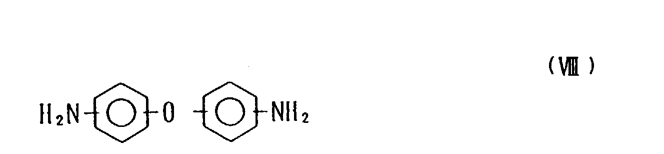 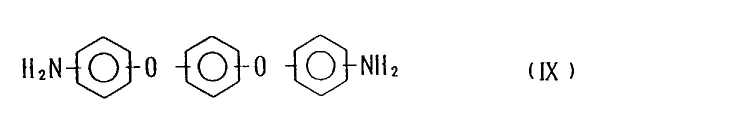 excluding the case where the diamine is solely 4,4'-diaminodiphenyl ether, is reacted with 3,3'4,4'-diphenylethertetracarboxylic acid dianhydride in the presence of phthalic anhydride in an amount of from 0.01 to 1.0 mole per mole of the diamine, and the resulting polyamic acid is thermally or chemically imidized.

In a preferred process according to the invention a readily processable polyimide is prepared by reacting a diamine with a tetracarboxylic acid dianhydride and the resulting polyamic acid is thermally or chemically imidized, comprising:
(a) using as the diamine a single diamine or a mixture of diamines selected from 4,4'-diaminodiphenyl ether and 3,4'-diaminodiphenyl ether,
(b) using a tetracarboxylic acid dianhydride mixture obtained by mixing pyromellitic dianhydride with 3,3',4,4'-diphenylethertetracarboxylic acid dianhydride (optionally in admixture with 4,4'-(p-phenylenedioxy) diphthalic dianhydride) in an amount of from 0.05 to 1.0 mole per mole of 3,3',4,4'-diphenylethertetracarboxylic dianhydride, and
(c) conducting the reaction in the presence of phthalic anhydride in an amount of from 0.001 to 1.0 mole per mole of the diamine.

The polyimide of the present invention has excellent heat and chemical resistance, good transparency, outstanding processability due to thermoplasticity and can be melt-processed.

Thus the polyimide is very useful for space and aeronautic equipment, electric and electronic apparatus and heat resistant adhesives.

Exemplary polyimides of the invention have a recurring structural unit selected from:

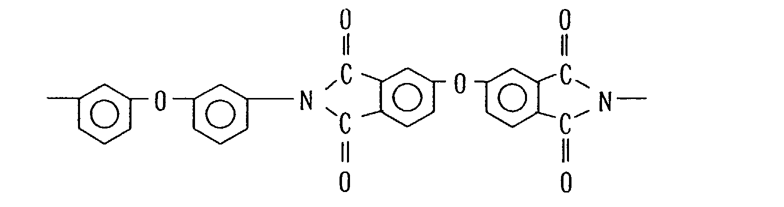

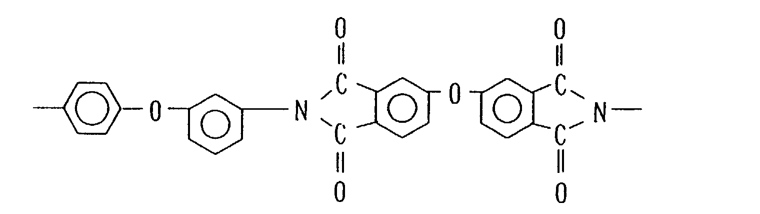

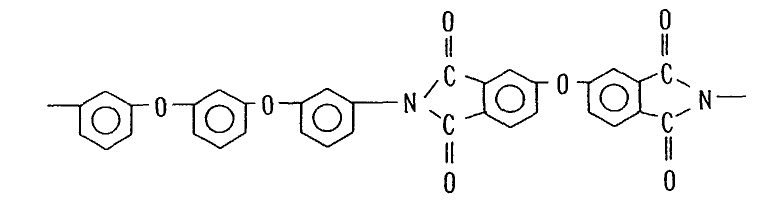

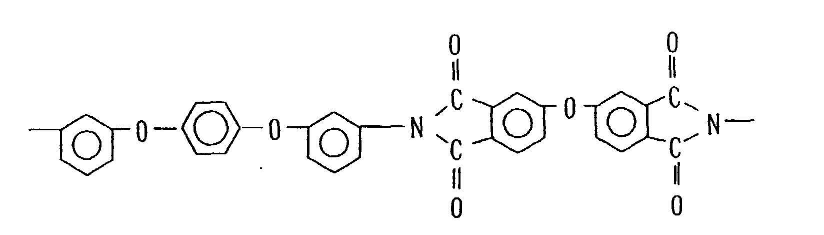

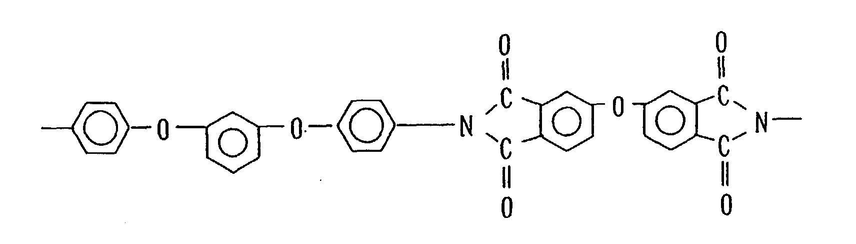

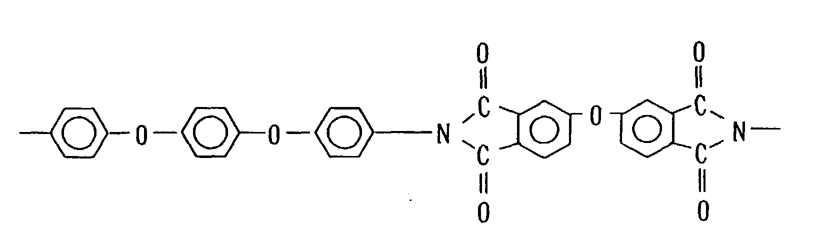

The diamines used in the invention include, for example, diaminodiphenyl ethers represented by the formula (VIII): 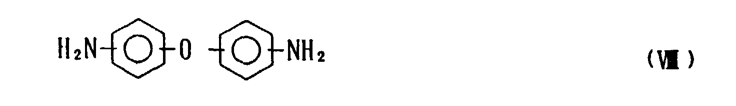 such as 4,4'-diaminodiphenyl ether, 3,3'-diaminodiphenyl ether, 2,2'-diaminodiphenyl ether, 2,3'-diaminodiphenyl ether, 2,4'-diaminodiphenyl ether and 3,4'-diaminodiphenyl ether; and bis(aminophenoxy)benzens represented by the formula (IX): 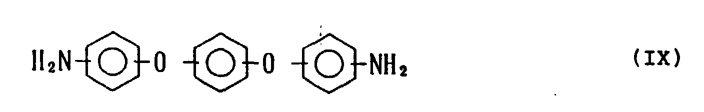 such as 1,3-bis(3-aminophenoxy)benzene, 1,3-bis(4-aminophenoxy)benzene, 1,4-bis(3-aminophenoxy)benzene and 1,4-bis(4-aminophenoxy)benzene.

Particularly in the preparation of copolyimide, 4,4'-diaminodiphenyl ether and 3,4'-diaminodiphenyl ether are used singly or as a mixture excluding the case where the diamine of formula (VIII) is solely 4,4'-diaminodiphenyl ether.

The tetracarboxylic acid dianhydride component used in the invention is 3,3',4,4'-diphenylethertetracarboxylic dianhydride of the formula (XI) : 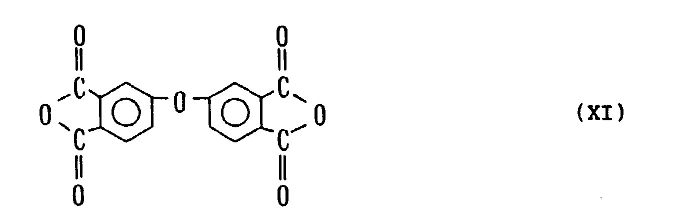 Particularly in the preparation of copolyimide, these tetracarboxylic dianhydrides are reacted in the presence of pyromellitic dianhydride of the formula (XIII):

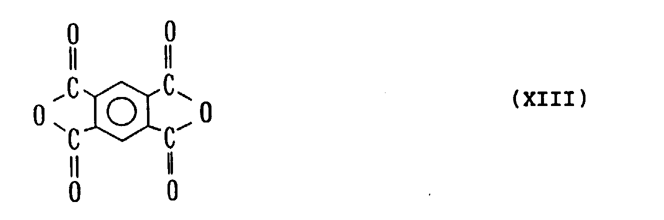

The polyimide of the invention is prepared by using the above diamines. These diamines can also be used as a mixture with other diamines as long as giving no adverse effect on the good properties of the polyimide.

Other diamines which can be used as a mixture include, for example, m-phenylenediamine, o-phenylenediamine,
p-phenylenediamine, m-aminobenzylamine, p-aminobenzylamine,
bis(3-aminophenyl)ether, (3-aminophenyl)(4-aminophenyl) ether,
bis(3-aminophenyl)sulfide, (3-aminophenyl)(4-aminophenyl) sulfide,
bis(4-aminophenyl)sulfide, bis(3-aminophenyl) sulfoxide,
(3-aminophenyl)(4-aminophenyl) sulfoxide,
bis(4-aminophenyl) sulfoxide, bis(3-aminophenyl) sulfone,
(3-aminophenyl)(4-aminophenyl) sulfone, bis(4-aminophenyl) sulfone,
3,3'-diaminobenzophenone, 3,4'-diaminobenzophenone,
4,4'-diaminobenzophenone, 3,3'-diaminodiphenylmethane,
3,4'-diaminodiphenylmethane, 4,4'-diaminodiphenylmethane,
bis [4-(3-aminophenoxy)phenyl] methane,
bis [4-(4-aminophenoxy)phenyl] methane,
1,1-bis [4-(3-aminophenoxy)phenyl] ethane,
1,1-bis [4-(4-aminophenoxy)phenyl] ethane,
1,2-bis [4-(3-aminophenoxy)phenyl] ethane,
1,2-bis [4-(4-aminophenoxy)phenyl] ethane,
2,2-bis [4-(3-aminophenoxy)phenyl] propane,
2,2-bis [4-(4-aminophenoxy)phenyl] propane,
2,2-bis [4-(3-aminophenoxy)phenyl] butane,
2,2-bis [4-(3-aminophenoxy)phenyl]-1,1,1,3,3,3-hexafluoropropane,
2,2-bis [4-(4-aminophenoxy)phenyl]-1,1,1,3,3,3-hexafluoropropane,
1,3-bis(3-aminophenoxy)benzene, 1,3-bis(4-aminophenoxy)benzene,
1,4-bis(3-aminophenoxy)benzene, 1,4-bis(4-aminophenoxy)benzene,
4,4'-bis(3-aminophenoxy)biphenyl, 4,4'-bis(4-aminophenoxy)biphenyl,
bis [4-(3-aminophenoxy)phenyl] ketone,
bis [4-(4-aminophenoxy)phenyl] ketone,
bis [4-(3-aminophenoxy)phenyl] sulfide,
bis [4-(4-aminophenoxy)phenyl] sulfide,
bis [4-(3-aminophenoxy)phenyl] sulfoxide,
bis [4-(4-aminophenoxy)phenyl] sulfoxide,
bis [4-(3-aminophenoxy)phenyl] sulfone,
bis [4-(4-aminophenoxy)phenyl] sulfone,
bis [4-(3-aminophenoxy)phenyl] ether,
bis [4-(4-aminophenoxy)phenyl] ether,
1,4-bis [4-(3-aminophenoxy)benzoyl] benzene,
1,3-bis [4-(3-aminophenoxy)benzoyl] benzene,
4,4'-bis [3-(4-aminophenoxy)benzoyl] diphenyl ether,
4,4'-bis [3-(3-aminophenoxy)benzoyl] diphenyl ether,
4,4'-bis [4-(4-amino-α,α-dimethylbenzyl)phenoxy] benzophenone,
4,4'-bis [4-(4-amino-α,α-dimethylbenzyl)phenoxy] diphenyl sulfone,
bis [4-{4-(4-aminophenoxy)phenoxy)phenoxy} phenyl] sulfone,
1,4-bis [4-(4-aminophenoxy)-α,α-dimethylbenzyl] benzene,
1,3-bis [4-(4-aminophenoxy)-α,α-dimethylbenzyl] benzene. These diamines are used singly or as a mixture.

A portion of the phthalic anhydride illustrated by the formula(X) in the invention can be replaced by other dicarboxylic acid dianhydride as long as giving no adverse effect on the good properties of the polyimide.

Exemplary dicarboxylic acid dianhydride which can replace a portion of the phthalic anhydride include
2,3-benzophenonedicarboxylic anhydride,
3,4-benzophenonedicarboxylic anhydride,
2,3-dicarboxyphenyl phenyl ether anhydride,
3,4-dicarboxyphenyl phenyl ether anhydride,
2,3-biphenyldicarboxylic anhydride,
3,4-biphenyldicarboxylic anhydride,
2,3-dicarboxyphenyl phenyl sulfone anhydride,
3,4-dicarboxyphenyl phenyl sulfone anhydride,
2,3-dicarboxyphenyl phenyl sulfide anhydride,
3,4-dicarboxyphenyl phenyl sulfide anhydride,
1,2-naphthalenedicarboxylic anhydride,
2,3-naphthalenedicarboxylic anhydride,
1,8-naphthalenedicarboxylic anhydride,
1,2-anthracenedicarboxylic anhydride,
2,3-anthracenedicarboxylic anhydride and
1,9-anthracenedicarboxylic anhydride.

Phthalic anhydride of the formula (X) is used in an amount of from 0.001 to 1.0 mole per mole of the sum of the diamine compounds used. Amounts less than 0.001 mole lead to viscosity increase in high temperature processing and impair meltprocessability. On the other hand, amounts exceeding 1.0 mole cause reduction of mechanical strengths. Preferred amounts for use are in the range of from 0.01 to 0.5 mole.

In the preparation of copolyimide of the invention, pyromellitic dianhydride is preferably used in an amount of from 0.1 to 0.5 mole per mole of 3,3',4,4'-diphenylethertetracarboxylic dianhydride. Amounts less than 0.05 mole does not improve heat resistance. On the other hand, amounts exceeding 1.0 mole lead to remarkable increase in melt viscosity in high temperature processing and make injection moulding or extrusion moulding impossible.

In the preparation process of the invention, the reaction is preferably carried out in an organic solvent.

Exemplary solvents which can be used include
N,N-dimethylformamide, N,N-dimethylacetamide, N,N-diethylacetamide,
N,N-dimethylmethoxyacetamide, N-methyl-2-pyrrolidone,
1,3-dimethyl-2-imidazolidinone, N-methylcaprolactam,
1,2-dimethoxyethane-bis(2-methoxyethyl)ether,
1,2-bis(2-methoxyethoxy)ethane,
bis (2-(2-methoxyethoxy)ethyl) ether, tetrahydrofuran, 1,3-dioxane, 1,4-dioxane, pyridine, picoline, dimethyl sulfoxide, dimethyl sulfone, tetramethylurea, hexamethylphosphoramide, phenol, o-cresol, m-cresol, p-cresol, m-cresylic acid, p-chlorophenol and anisole. These organic solvents can be used singly or as a mixture.

In the practice of the invention, the diamine, the tetracarboxylic acid dianhydride and the phthalic anhydride are added to the organic solvent and the reaction is carried out. Any of the following addition method can be conducted in the reaction.
(a) After reacting diamine with tetracarboxylic acid dianhydride, phthalic anhydride is added and the reaction is continued.
(b) After reacting diamine with phthalic anhydride, tetracarboxylic acid dianhydride is added and the reaction is continued.
(c) Diamine, tetracarboxylic acid dianhydride and phthalic anhydride are added at the same time and the reaction is carried out.

The reaction temperature is usually 250 °C or less, preferably 50 °C or less.

No particular limitation is imposed on the reaction pressure. The reaction can be sufficiently carried out under atmospheric pressure. The reaction time differs depending upon the kind of solvent and reaction temperature. The reaction time of 4 to 24 hours is usually sufficient.

The resultant polyamic acid is converted to polyimide having recurring structural units corresponding to the polyamic acid by thermally imidizing at 100 to 400 °C or chemically imidizing with acetic anhydride and other imidizing agent.

Alternatively, polyimide can also be prepared by suspending or dissolving diamine, tetracarboxylic acid dianhydride and phthalic anhydride in an organic solvent and then by heating to carry out formation of the polyamic acid precursor and imidization at the same time.

That is, film or powder of polyimide can be obtained by conventionally known method.

Every polyimide thus obtained is a aromaticpolyetherimide having imide bonds and ether bonds in a polymer molecule. Glass transition temperature of the polyimide is in the temperature range of from 150 to 270 °C and the polyimide can be used for melt-processing.

The melt viscosity of the polyimide can be set on 30,000 poise or less in shear rate of 1,000 sec⁻¹ at the temperature range of 300 to 450°C. Therefor, the polyimide is used as the materials for extrusion molding and injection molding. Molding conditions are dependent upon a structure and molecular weight of the polyimide used, particularly, when the polyimide is applied as the materials for injection molding, the molding is usually carried out under the conditions of the temperature range of from 300 to 450°C and injection pressure range of from 50 to 2,000 kg/cm² by means of a conventional processing equipment for an engineering plastic resin.

In carrying out melt-processing of the polyimide of the invention, other thermoplastic resins can also be added in a suitable amount depending upon the object of the invention as long as the objects of the invention is not impaired.

Exemplary thermoplastic resins which can be used include, polyethylene, polypropylene, polycarbonate, polyarylate, polyamide, polysulfone, polyether sulfone, polyether ether ketone, polyether ketone, polyphenylene sulfide, polyamideimide, polyetherimide and modified polyphenylene oxide.

Fillers which are commonly used for thermoplastic resin compositions can also be used as long as giving no adverse effects on the objects of the invention. Exemplary fillers include, graphite, carborundum, silica powder, molybdenum disulfide, fluoro resins and other abrasion resistance improvers; glass fibers, carbon fibers, boron fibers, silicon carbide base fibers, carbon whiskers, asbestos, metallic fibers, cellamic fibers and other reinforcements; antimony trioxide, magnesium carbonate, calcium carbonate and other flame retardants; clay, mica and other electrical property improvers; asbestos, silica, graphite and other tracking resistance improvers; barium sulfate, silica, calcium metasilicate and other acid resistance improvers; iron powder, zinc powder, aluminum powder, copper powder and other thermal conductivity emprovers; and other miscellaneous materials such as glass beads, glass sphere, talc, diatomaceous earth, alumina, silicate balloons, hydrated alumina, metal oxides and coloring materials.

The present invention will hereinafter be illustrated further in detail by way of Examples and Comparative Examples.

Physical properties in the Examples and Comparative Examples were measured by the following method:
Tg, Tc, Tm :
Measured by DSC(Shimadzu DT-40, Series DSC-41M)
5% Weight loss temperature :
Measured by DTG(Shimadzu DT-40, Series DTG-40M) in the air
Melt viscosity :
Measured with Shimadzu-Koka Type Flow Tester
CFT 500A under 100 kg load

In addition reference is made to the accompanying drawings, in which

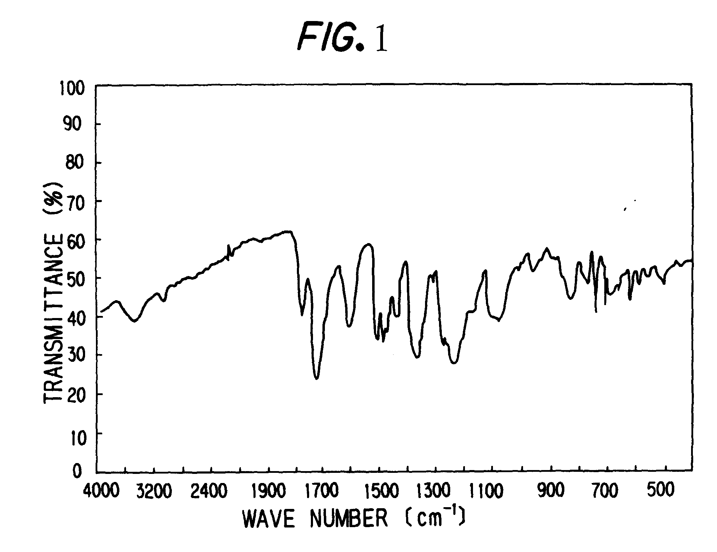

Figures 1, 2, 3 and 4 illustrate the IR absorption spectrum of polyimide powder respectively obtained in Examples 1, 4, 5 and 9 of the invention.

### Example 1

To a reaction vessel equipped with a stirrer, reflux condenser, water separator and nitrogen tube inlet, 120.0 g (0.6 mole) of 3,4'-diaminodiphenyl ether, 176.7 g (0.57 mole) of 3,3',4,4'-diphenylethertetracarboxylic dianhydride, 8.88 g (0.06 mole) of phthalic anhydride, 8.4 g of γ-picoline and 1200 g of m-cresol were charged. The mixture was heated to 145 °C with stirring in a nitrogen atmosphere while distilling out about 20 cc of water and further reacted for 4 hours at 140 to 150 °C. The reaction mixture was cooled to room temperature and poured into about 100ℓ of methyl ethyl ketone. The precipitate was filtered, and dried at 180 °C for 24 hours under reduced pressure to obtain 279 g (98.2 % yield) of polyimide powder.

The polyimide powder obtained had an inherent viscosity of 0.47 dℓ /g, glass transition temperature of 225 °C, and 5% weight loss temperature of 543 °C in the air.

The IR absorption spectrum of the polyimide powder is illustrated in Figure 1. In the spectrum, characteristic absorption of imide near 1780 cm⁻¹ and 1720 cm⁻¹, and characteristic absorption of ether linkage near 1240 cm⁻¹ were clearly found.

The polyimide had a melt viscosity of 3600 poise at 370 °C.

### Comparative Example 1

To the same reaction vessel as used in Example 1 120.0 9 (0.6 mole) of 4,4'-diaminodiphenyl ether, 176.7 g (0.57 mole) of 3,3',4,4'-diphenylethertetracarboxylic dianhydride, 8.88 g (0.06 mole) of phthalic anhydride, 8.4 g of γ-picoline and 1200 g of m-cresol were charged. The mixture was heated to 145 °C with stirring in a nitrogen atmosphere while distilling out about 20 cc of water and further reacted for 4 hours at 140 to 150 °C. The reaction mixture was cooled to room temperature and poured into about 10 ℓ of methyl ethyl ketone. Precipitated polyimide powder was filtered, washed with methyl ethyl ketone and dried at 180°C for 24 hours under reduced pressure to obtain 280.3 g (98.7% yield) of polyimide powder having an inherent viscosity of 0.52 dℓ /g.

The inherent viscosity was measured at 35°C in a solution obtained by heat-dissolving 0.50 g of the polyimide powder in 100 mℓ of a solvent mixture of p-chlorophenol/phenol (9/1 by weight). The polyimide powder had a glass transition temperature of 245 °C and a 5 % weight loss temperature of 550 °C in the air.

### Example 2

To the same reaction vessel as used in Example 1, 120.0 g (0.6 mole) of 3,4'-diaminodiphenyl ether and 1217 g of N,N'-dimethylacetamide were charged, and 184.1 g (0.594 mole) of 3,3',4,4'-diphenylethertetracarboxylic dianhydride was added by portions at room temperature in a nitrogen atmosphere with caution to prevent temperature rise of the solution. The resulting mixture was stirred for 20 hours at room temperature is and then 1.77 g (0.012 mole) of phthalic anhydride was added and further stirred for 3 hours. The polyamic acid thus obtained had an inherent viscosity of 1.17 d ℓ /g.

The inherent viscosity of the polyamic acid was measured at 35 °C in a N,N-dimethylacetamide solution containing 0.5 g of the polyamic acid in 100 mℓ of the solvent.

A portion of the polyamic acid solution was cast on a glass plate and heated at 100 °C, 200 °C and 300 °C for respectively an hour to obtain a polyimide film having a thickness of about 50 µm. The polyimide film had a tensile strength of 15.3 kg/mm²,

tensile modulus of 344 kg/mm² and elongation of 7.8 % in accordance with ASTM D-822. The polyimide film also had a glass transition temperature of 235 °C by TMA penetration method.

### Example 3

The same precedures as described in Example 2 were carried out by using the same reaction vessel as used in example 1 except that 3,4'-diaminodiphenyl ether is replaced by 3,3'-diaminodiphenyl ether. The polyamic acid solution thus obtained had an inherent viscosity of 0.92 d ℓ /g.

The procedures described in Example 2 were repeated by using the polyamic acid thus obtained to prepare a polyimide film having a thickness of 50 µm.

The polyimide film had glass transmition temperature of 215 °C by TMA penetration method.

### Example 4

To the same reaction vessel as used in Example 1, 146.0 g (0.5 mole) of 1,4-bis(4-aminophenoxy)benzene, 147.25 g (0.475 mole) of 3,3',4,4'-diphenylethertetracarboxylic dianhydride, 7.40 g (0.05 mole) of phthalic anhydride, 7.0 g of γ-picoline and 1170 g of m-cresol were charged. The mixture was heated to 145 °C with stirring in a nitrogen atmosphere while distilling out about 18 cc of water and further reacted at 140 to 150 °C for 4 hours. The reaction mixture was then cooled to room temperature and poured into about 10 ℓ of methyl ethyl ketone. Precipitated polyimide powder was filtered washed with methyl ethyl ketone and dried at 180 °C for 24 hours under reduced pressure to obtain 279.3 g (98.8% yield) of polyimide powder having an inherent viscosity of 0.50 dℓ/g.

The inherent viscosity was measured at 35 °C in a solution obtained by heat-dissolving 0.50 g of the polyimide powder in 100 mℓ of a solvent mixture of p-chorophenol/phenol (9/1 by weight). The polyimide powder had a glass transition temperature of 222 °C, crystallization temperature (Tc) of 324 °C, crystal melting temperature (Tm) of 428 °C, and 5% weight loss temperature of 535 °C in the air.

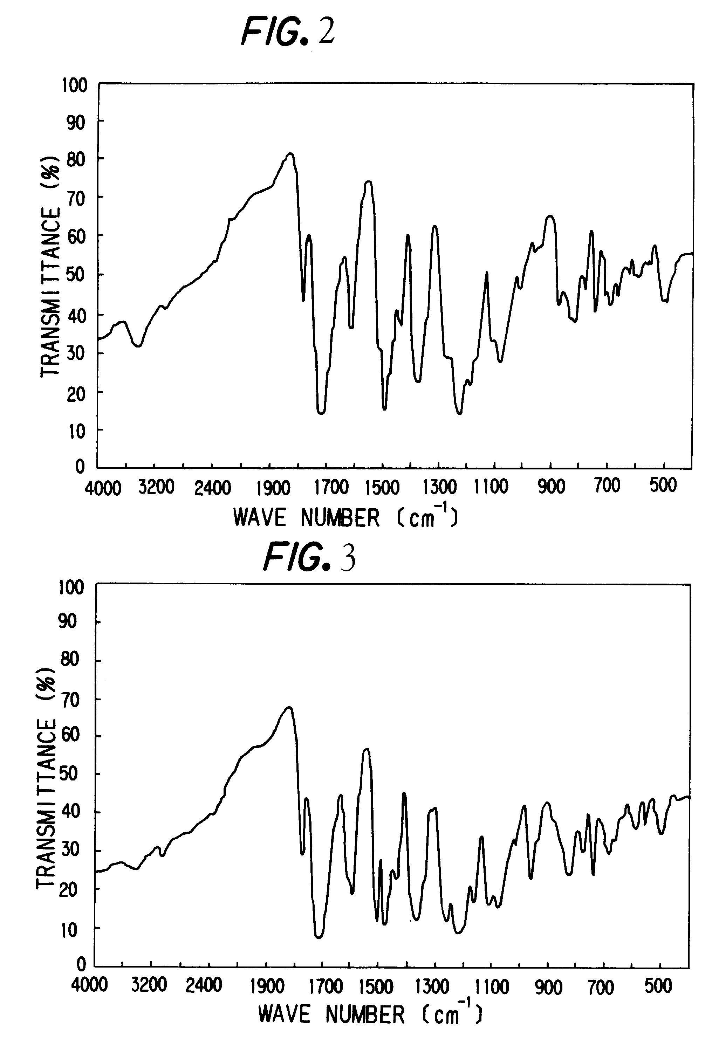

The IR absorption spectrum of the polyimide powder is illustrated in Figure 2. In the spectrum, characteristic absorption band of imide near 1780 cm⁻¹ and 1720 cm⁻¹, and characteristic absorption bond of ether linkage near 1240 cm⁻¹ were clearly observed.

Following results were obtained in elemental analysis of the polyimide powder thus obtained.

| Elemental analysis | | | |
|---|---|---|---|
| | C | N | H |
| Calculated (%) | 72.17 | 4.95 | 3.20 |
| Found (%) | 72.14 | 4.96 | 3.16 |

The polyimide powder was insoluble in chlorinated hydrocarbon such as methylene chloride and chloroform.

Melt viscosity of the polyimide powder thus obtained was measured with a Koka type flow tester under 100 kg load by using an oriffice having a diameter of 0.1 cm and a length of 1 cm. The melt viscosity was 9000 poise at 450°C. The strand obtained was light yellow and flexible.

### Comparative Example 2

To the same reaction vessel as used in Example 1, 146.0 g (0.5 mole) of 1,4-bis(4-aminophenoxy)benzene, 103.55 g (0.475 mole) of pyromellitic dianhydride, 7.4 g (0.05 mole) of phthalic anhydride, 7.0 g of γ-picoline and 1000 g of m-cresol were charged. The same procedures as described in Example 4 were carried out to obtain 237.0 g (99.2% yield) of polyimide powder.

The polyimide thus obtained had no distinct glass transition temperature and exhibited no melt-flowability at all at 450 °C.

### Example 5

The same procedures as described in Example 4 were carried out except that 1,4-bis(4-aminophenoxy)benzene was replaced by 1,3-bis(4-aminophenoxy)benzene.

Polyimide powder thus obtained was 278.5 g (98.5% yield) and had an inherent viscosity of 0.50 dℓ /g, Tg of 205 °C, and a 5% weight loss temperature of 540 °C in the air.

The IR absorption spectrum of the polyimide powder thus obtained is illustrated in Figure 3. In the spectrum, characteristic absorption band of imide near 1780 cm⁻¹ and 1720 cm⁻¹, and characteristic absorption band of ether linkage near 1240 cm⁻¹ were clearly found.

Following results were obtained in elemental analysis of the polyimide powder obtained.

| Elemental analysis | | | |
|---|---|---|---|
| | C | N | H |
| Calculated (%) | 72.17 | 4.95 | 3.20 |
| Found (%) | 72.15 | 4.92 | 3.18 |

Melt viscosity of the polyimide powder obtained was 1900 poise at 370 °C by a Koka type flow tester. The strand obtained was light yellow and flexible.

Stability of melt viscosity was measured on the polyimide powder obtained by changing retention time in the cylinder of the flow tester at 370 °C. Almost no increase was observed on the melt viscosity.

### Comparative Example 3

Polyimide powder was prepared by carrying out the same procedures as described in Example 5 except that phthalic anhydride was omitted. The polyimide powder obtained had a glass transition temperature of 204 °C and an inherent viscosity of 0.50 dℓ /g. Melt viscosity was measured by changing the retention time in the cylinder as conducted in Example 5. Melt viscosity was increased with extended retention time. Thus, heat stability of the polyimide powder thus obtained was inferior to that of the polyimide powder obtained in Example 5.

### Example 6

To the same reaction vessel as used in Example 1, 146.0 g (0.5 mole) of 1,4-bis(3-aminophenoxy)benzene, 148.8 g (0.486 mole) of 3,3',4,4'-diphenylethertetracarboxylic dianhydride, 5.92 g (0.04 mole) of phthalic anhydride, 7 g of γ-picoline and 1200 g of m-cresol were charged. The mixture was heated to 145 °C with stirring in a nitrogen atmosphere while distilling out about 18 cc of water and further reacted at 140 to 150 °C for 4 hours.

The reaction mixture was then cooled to room temperature and poured into about 10ℓ of methyl ethyl ketone. Precipitated polyimide powder was filtered, washed with methyl ethyl ketone and dried at 180 °C for 24 hours under reduced pressure to obtain 277 g (98.0 % yield) of polyimide powder.

The polyimide powder obtained had an inherent viscosity of 0.48 dℓ /g, Tg of 191°C and a 5% weight loss temperature of 545 °C in the air.

Following results were obtained in elemental analysis of the polyimide powder thus obtained.

| Elemental analysis | | | |
|---|---|---|---|
| | C | N | H |
| Calculated (%) | 72.25 | 4.93 | 3.19 |
| Found (%) | 72.23 | 4.91 | 3.17 |

Melt viscosity of the polyimide powder thus obtained was 2800 poise at 340 °C by a Koka type flow tester. The strand obtained was colorless, transparent, flexible and tough.

### Example 7

The same reaction vessel as described in Example 1 was used and the same procedures as described in Example 6 were carried out except that 1,4-bis(3-aminophenoxy)benzene was replaced by 1,3-bis(3-aminophenoxy)benzene.

The polyimide powder thus obtained was 278 g (98.2% yield) and had an inherent viscosity of 0.45 dℓ/g, Tg of 172 °C and a 5% weight loss temperature of 540 °C in the air.

Following results were obtained in elemental analysis of the polyimide powder obtained.

| Elemental analysis | | | |
|---|---|---|---|
| | C | N | H |
| Calculated (%) | 72.25 | 4.93 | 3.19 |
| Found (%) | 72.21 | 4.90 | 3.15 |

Melt viscosity of the polyimide powder thus obtained was 4200 poise at 290 °C a Koka type flow tester. The strand obtained was colorless, transparent, flexible and tough.

### Example 8

To the same reaction vessel as used in Example 1, 146 g (0.5 mole) of 1,4-bis(4-aminophenoxy)benzene and 1200 g of N,N-dimethylacetamide were charged, and 153.45 g (0.495 mole) of 3,3',4,4'-diphenylethertetracarboxylic dianhydride was added by portions at room temperature in a nitrogen atmosphere with caution to prevent temperature rise of the solution. The resulting mixture was stirred for 20 hours at room temperature and then 1.48 g (0.01 mole) of phthalic anhydride was aded and further stirred for 3 hours. The polyamic acid thus obtained had an inherent viscosity of 0.95 dℓ/g.

The inherent viscosity of the polyamic acid was measured at 35 °C in a N,N-dimethylcetamide solution containing 0.5 g of the polyamic acid in 100 mℓ of the solvent.

A portion of the polyamic acid solution was cast on a glass plate and heated at 100 °C, 200 °C and 300°C for respectively an hour to obtain a polyimide film having a thickness of about 50 µm.

The polyimide film had a total light transmittance of 86.9 % and haze of 0.6 % in accordance with ASTM D-1003.

### Example 9

To the same reaction vessel as used in Example 1, 120.0 g (0.600 mole) of 3,4'-diaminodiphenyl ether, 141.36 g (0.456 mole) of 3,3',4,4'-diphenylethertetracarboxylic dianhydride, 24.85 g (0.114 mole) of pyromellitic dianhydride, 8.88 g (0.06 mole) of phthalic anhydride, 8.4 g of γ-picoline and 1180 g of m-cresol were charged.

The mixture was heated to 145 °C with stirring in a nitrogen atmosphere while distilling out 21 cc of water and further reacted for 4 hours at 140 to 150 °C. The reaction mixture was then cooled to room temperature and poured into about 10 ℓ of methyl ethyl ketone. The precipitated polyimide was filtered, washed with methyl ethyl ketone and dried at 180 °C for 24 hours under reduced pressure to obtain 269.4 g (98.5% yield) of polyimide powder.

The polyimide powder thus obtained had an inherent viscosity of 0.49 dℓ /g. The inherent viscosity was measured at 35 °C in a solution obtained by heat-dissolving 0.50 g of the polyimide powder in 100 mℓ of a solvent mixture of p-chlorophenol/phenol (9/1 by weight). The polyimide powder had a glass transition temperature of 237 °C and a 5 % weight loss temperature of 558 °C.

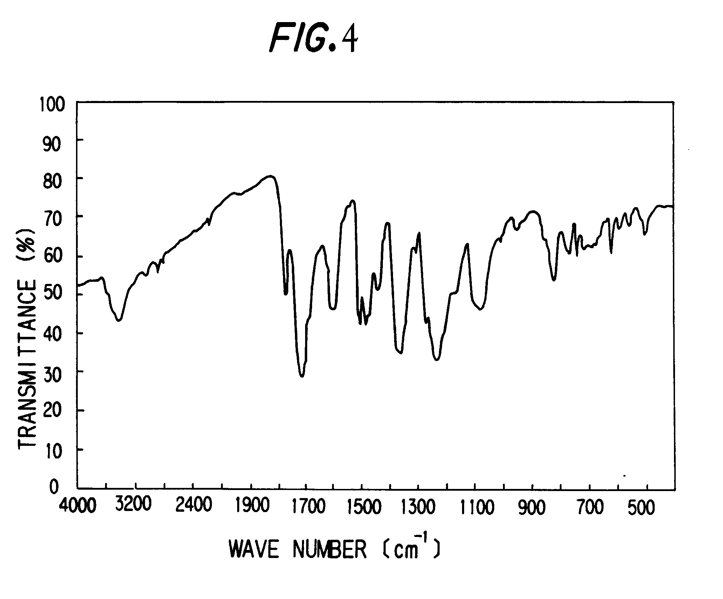

The IR absorption spectrum of the polyimide powder is illustrated in Figure 4. In the spectrum, characteristic absorption band of imide near 1780 cm⁻¹ and 1720 cm⁻¹ and characteristic absorption band of ether linkage near 1240 cm⁻¹ were clearly observed.

Follwing results were obtained in elemental analysis of the polyimide powder thus obtained.

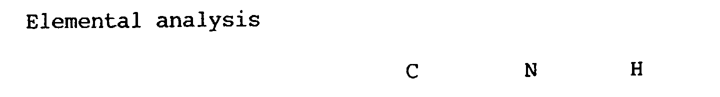

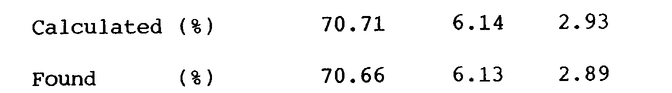

The polyimide powder was insoluble in halogenated hydrocarbon solvent such as methylene chloride and chloroform.

Melt viscosity of the polyimide powder thus obtained was measured with a Koka type flow tester under 100 kg load by using an oriffice having a diameter of 0.1 cm and a length of 1 cm. The melt viscosity was 4100 poise at 370 °C. The strand obtained was light yellow, transparent and flexible.

Processing stability of the polyimide powder thus obtained was measured by changing the retention time in the cylinder of the flow tester at 390 °C under 100 kg load. Melt viscosity was almost constant even though retention time in the cylinder was extended. Thus, heat stability of the polyimide powder was good.

### Comparative Example 4

To the same reaction vessel as used in Example 1, 120.0 g (0.6 mole) of 3,4'-diaminodiphenyl ether, 124.26 g (0.57 mole) of pyromellitic dianhydride, 8.88 g (0.06 mole) of phthalic anhydride, 8.4 g of γ-picoline and 980 g of m-cresol were charged. The same procedures as described in Example 20 were carried out to obtain 226.7 g (98.0% yield) of polyimide powder. The polyimide powder obtained had no distinct glass transition temperature and also exhibited no melt flowability at all at 380 °C and 450 °C.

### Examples 10 to 12 and Comparative Examples 5 and 6

Polyimide powder was obtained by carrying out the same procedures as described in Example 9 except that the mole ratio of 3,3',4,4'-diphenylethertetracarboxylic dianhydride to pyromellitic dianhydride was changed. The inherent viscosity, glass transition temperature and melt viscosity at 390 °C of the polyimide powder obtained are summarized in Table 1 together with these of Comparative Exemples.

### Comparative Examples 7

Pellets of marketed ULTEM 1000 (Trade Mark of General Electric Co.) was dissolved in methylene chloride to a concentration of 20 % by weight.

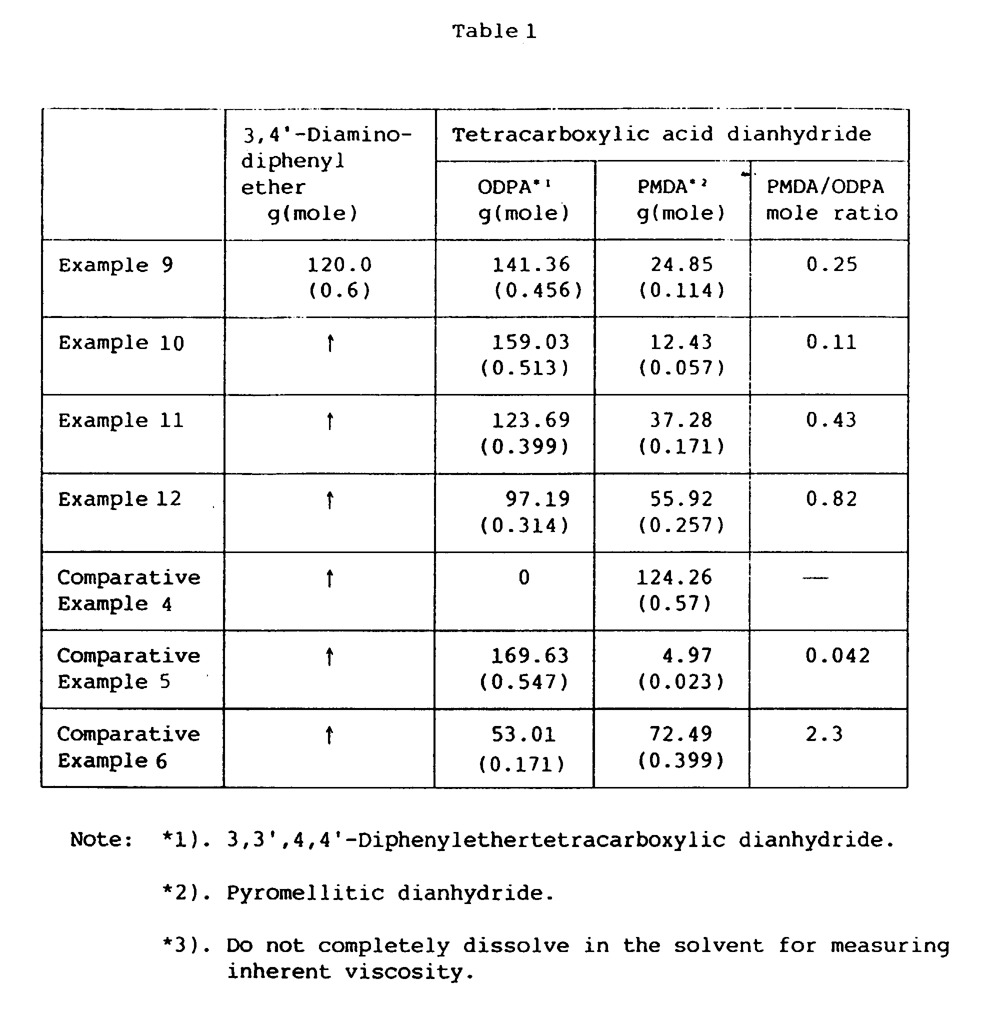

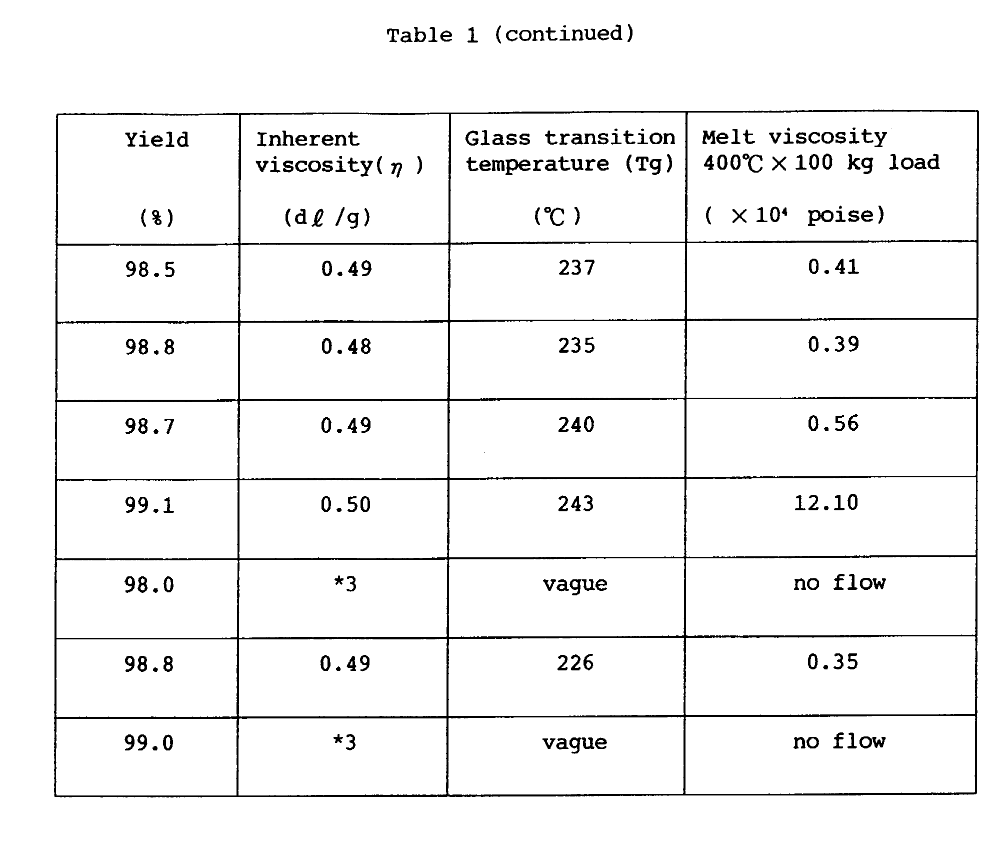

## Claims

1. A polyimide obtained by blocking the chain end of a polymer molecule with a divalent aromatic group derived from phthalic anhydride, the polyimide comprising a recurring structural unit represented by the formula: 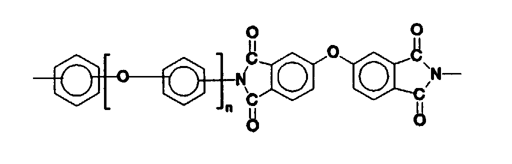 in which n is 1 or 2,
with the exception of polyimide where the structural units of the above formula are exclusively those of the formula:

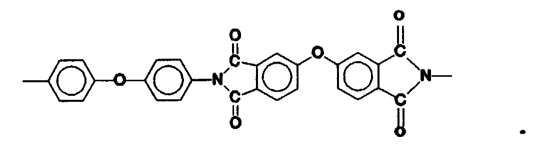

2. A melt-processable polyimide obtained by blocking the chain end of a polymer molecule with a divalent aromatic group derived from phthalic anhydride, the polyimide comprising 2 or more recurring structural units which are a mixture of a recurring structural unit represented by the formula III and/or a recurring structural unit represented by the formula IV with a recurring structural unit represented by the formula V and/or a recurring structural unit represented by the formula VI: 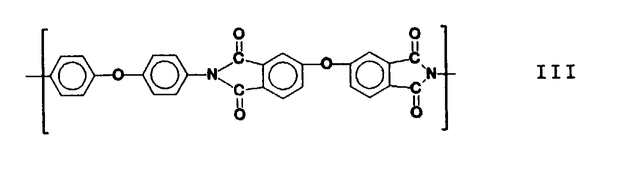 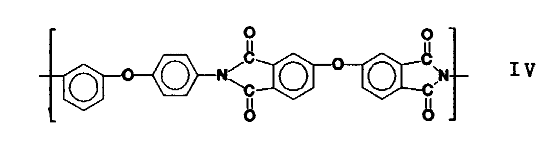 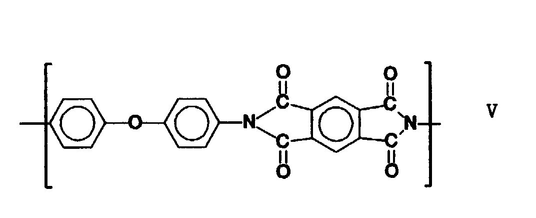 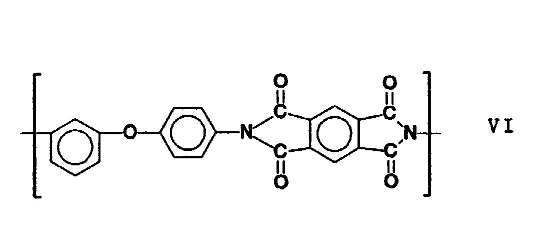 the proportion of a recurring unit represented by the formula V and/or a recurring unit represented by the formula VI being from 0.05 to 1.0 mole per mole of a recurring unit represented by the formula III and/or a recurring unit represented by the formula IV.

3. A process for the preparation of a readily processable polyimide in which a single diamine, or a mixture of the diamines, having the formulae: 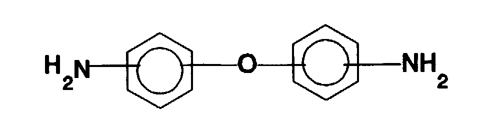 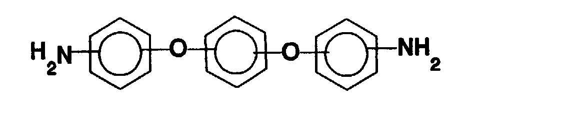 excluding the case where the diamine of said formulae is solely 4,4'-diaminodiphenyl ether, is reacted with 3,3'4,4'-diphenylethertetracarboxylic acid dianhydride in the presence of phthalic anhydride in an amount of from 0.01 to 1.0 mole per mole of the diamine, and the resulting polyamic acid is thermally or chemically imidized.

4. A process as claimed in Claim 3 in which the diamine is: 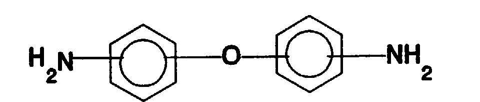 excluding the case where the diamine of this formula is solely 4,4'-diaminodiphenyl ether.

5. A process as claimed in Claim 3 in which the diamine is:

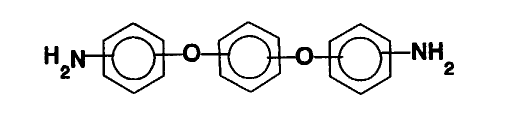

6. A process for the preparation of a readily processable polyimide in which a diamine which is 4,4'-diaminodiphenyl ether, 3,4'-diaminodiphenyl ether, or a mixture of them is reacted with a tetracarboxylic acid dianhydride mixture obtained by mixing pyromellitic dianhydride with 3,3',4,4'-diphenylethertetracarboxylic acid dianhydride in an amount of from 0.05 to 1.0 mole per mole of the 3,3',4,4'-diphenyl- ethertetracarboxylic dianhydride, in the presence of phthalic anhydride in an amount of from 0.001 to 1.0 mole per mole of the diamine, and the resulting polyamic acid is thermally or chemically imidized.

7. A process as claimed in Claim 6 in which the diamine is 4,4'-diaminodiphenyl ether and the tetracarboxylic acid dianhydride is a mixture obtained by mixing pyromellitic dianhydride with 3,3',4,4'-diphenylethertetracarboxylic acid dianhydride.

8. A process as claimed in Claim 7 in which the diamine is 3,4'-diaminodiphenyl ether and the tetracarboxylic acid dianhydride is a mixture obtained by mixing pyromellitic dianhydride with 3,3',4,4'-diphenylethertetracarboxylic acid dianhydride.

## Patentansprüche

1. Ein Polyimid, das durch Blockieren des Kettenendes eines Polymermoleküls mit einer von Phthalsäureanhydrid abgeleiteten zweiwertigen aromatischen Gruppe gewonnen wird, wobei das Polyimid eine wiederkehrende Struktureinheit der Formel: 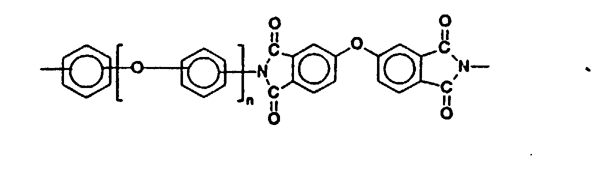 umfaßt, worin n für 1 oder 2 steht,
mit Ausnahme von Polyimid, bei dem die Struktureinheiten der obigen Formel ausschließlich die der Formel: 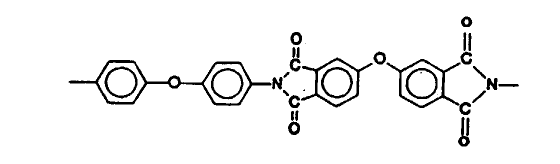 sind.

2. Ein aus der Schmelze verarbeitbares Polyimid, das durch Blockieren des Kettenendes eines Polymermoleküls mit einer von Phthalsäureanhydrid abgeleiteten zweiwertigen aromatischen Gruppe gewonnen wird, wobei das Polyimid zwei oder mehrere wiederkehrende Struktureinheiten umfaßt, bei denen es sich um ein Gemisch aus einer wiederkehrenden Struktureinheit der Formel III und/oder einer wiederkehrenden Struktureinheit der Formel IV mit einer wiederkehrenden Struktureinheit der Formel V und/oder einer wiederkehrenden Struktureinheit der Formel VI handelt: 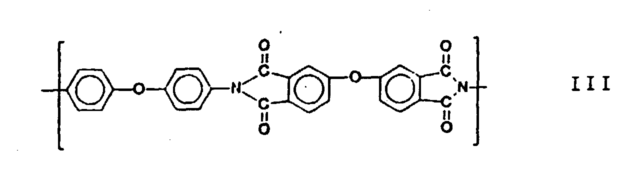 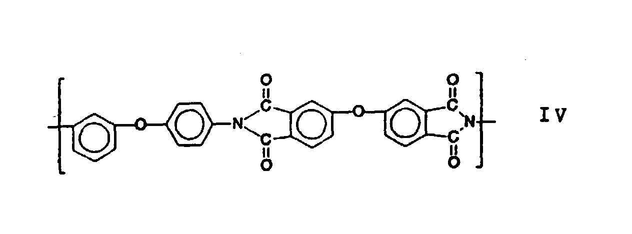 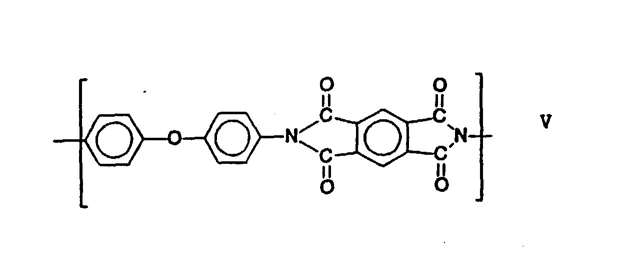 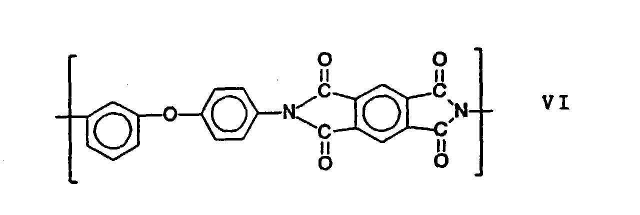 wobei der Anteil einer wiederkehrenden Einheit der Formel V und/oder einer wiederkehrenden Einheit der Formel VI von 0,05 bis 1,0 Mol je Mol einer wiederkehrenden Einheit der Formel III und/oder einer wiederkehrenden Einheit der Formel IV beträgt.

3. Ein Verfahren zur Herstellung eines leicht zu verarbeitenden Polyimids, bei dem ein einzelnes Diamin oder ein Gemisch der Diamine mit den Formeln: 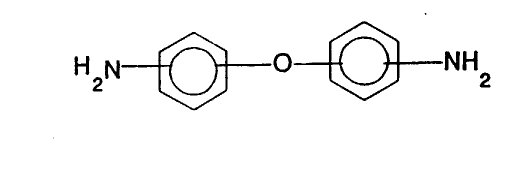 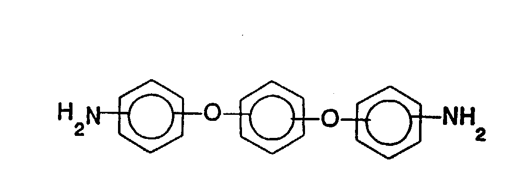 mit Ausnahme des Falles, in dem das Diamin der besagten Formeln lediglich 4,4'-Diaminodiphenylether ist, in Gegenwart von Phthalsäureanhydrid in einer Menge von 0,01 bis 1,0 Mol je Mol des Diamins mit 3,3'4,4'-Diphenylethertetracarbonsäuredianhydrid umgesetzt und die entstehende Polyamidsäure thermisch oder chemisch imidiert wird.

4. Ein Verfahren nach Anspruch 3, bei dem das Diamin 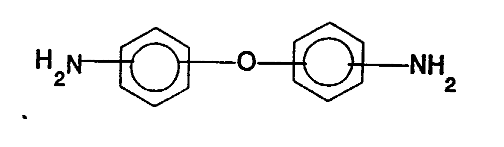 ist, mit Ausnahme des Falles, in dem das Diamin dieser Formel lediglich 4,4'-Diaminodiphenylether ist.

5. Ein Verfahren nach Anspruch 3, bei dem das Diamin 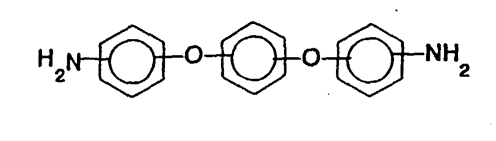 ist.

6. Ein Verfahren zur Herstellung eines leicht zu verarbeitenden Polyimids, wobei ein Diamin, bei dem es sich um 4,4'-Diaminodiphenylether, 3,4'-Diaminodiphenylether oder ein Gemisch daraus handelt, mit einem Tetracarbonsäuredianhydridgemisch, das durch Mischen eines Pyromellitsäuredianhydrids mit 3,3',4,4'-Diphenylethertetracarbonsäuredianhydrid in einer Menge von 0,05 bis 1,0 Mol je Mol des 3,3',4,4'-Diphenylethertetracarbonsäuredianhydrids gewonnen wird, in Gegenwart von Phthalsäureanhydrid in einer Menge von 0,001 bis 1,0 Mol je Mol des Diamins umgesetzt und die entstehende Polyamidsäure thermisch oder chemisch imidiert wird.

7. Ein Verfahren nach Anspruch 6, bei dem das Diamin 4,4'-Diaminodiphenylether und das Tetracarbonbsäuredianhydrid ein Gemisch ist, das durch Mischen von Pyromellitsäuredianhydrid mit 3,3',4,4'-Diphenylethertetracarbonsäuredianhydrid gewonnen wird.

8. Ein Verfahren nach Anspruch 7, bei dem das Diamin 3,4'-Diaminodiphenylether und das Tetracarbonsäuredianhydrid ein Gemisch ist, das durch Mischen von Pyromellitsäuredianhydrid mit 3,3',4,4'-Diphenylethertetracarbonsäuredianhydrid gewonnen wird.

## Revendications

1. Polyimide obtenu par un blocage de l'extrémité de chaîne d'une molécule de polymère avec un groupe aromatique divalent obtenu à partir d'anhydride phtalique, le polyimide comprenant une unité structurelle récurrente représentée par la formule : 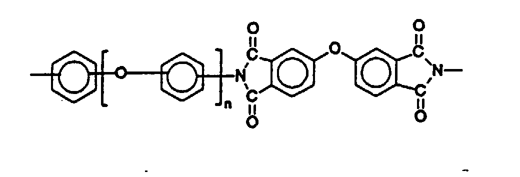 Dans laquelle n est égal à 1 ou 2,
à l'exception du polyimide dans lequel les unités structurelles de la formule précitée sont exclusivement celles de la formule.

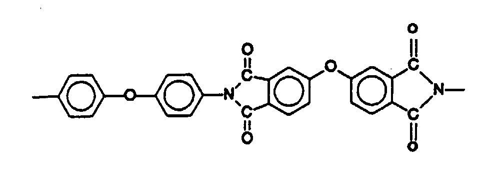

2. Polyimide traitable par fusion obtenue par un blocage de l'extrémité de chaîne d'une molécule de polymère avec un groupe aromatique divalent obtenu à partir d'anhydride phtalique, de polyimide comprenant deux unités structurelles récurrentes ou plus, qui sont un mélange d'une unité structurelle récurrente représentée par la formule III et/ou d'une unité structurelle récurrente représentée par la formule IV, avec une unité structurelle récurrente représentée par la formule V et/ou une unité structurelle récurrente représentée par la formule VI : 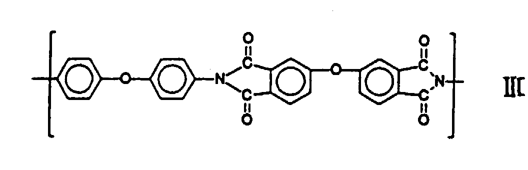 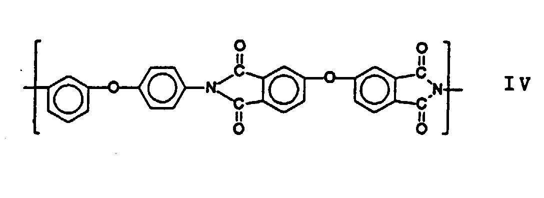 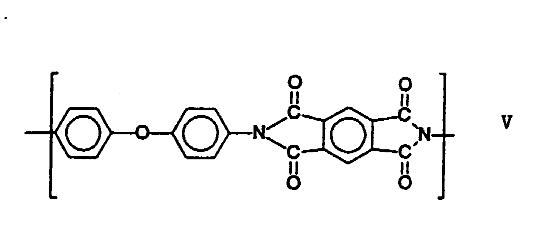 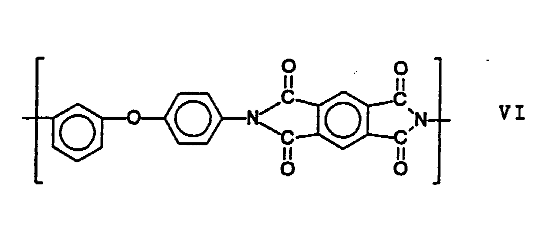 La proportion d'une unité récurrente représentée par la formule V et/ou d'une unité récurrente représentée par la formule VI étant comprise dans la plage allant de 0,05 à 1,0 mole par mole d'une unité récurrente représentée par la formule III et/ou d'une unité récurrente représentée par la formule IV.

3. Procédé de préparation d'un polyimide facilement traitable, dans lequel une diamine unique, ou un mélange des diamines, ayant les formules : 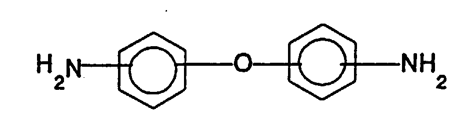 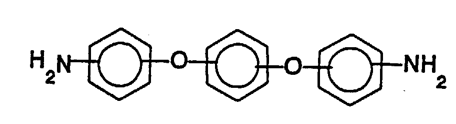 à l'exclusion du cas dans lequel la diamine desdites formules est uniquement du 4'4' diaminodiphényle éther, est mise en réaction avec un dianhydride d'acide 3,3'4,4' diphényl-éthertétracarboxylique en présence d'un anhydride phtalique, en une quantité comprise dans la plage allant de 0,01 à 1,0 mole par mole de la diamine, et l'acide polyamique résultant est imidisé thermiquement ou chimiquement.

4. Procédé selon la revendication 3, dans la lequel la diamine est : 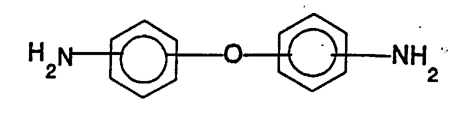 à l'exclusion du cas dans lequel la diamine de cette formule est seulement du 4,4' diaminodiphényle éther.

5. Procédé selon la revendication 3, dans lequel la diamine est :

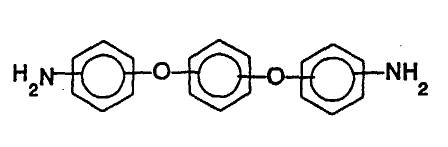

6. Procédé de préparation d'un polyimide facilement traitable, dans lequel une diamine, qui est du 4,4' diaminodiphényl éther, 3,4' diaminodiphényl éther, ou un mélange de ces derniers, est mise en réaction avec un mélange de dianhydride d'acide tetracarboxilique, obtenu par un mélange de dianhydride pyromellitique avec un dianhydride d'acide 3,3',4,4' diphényl éther tétracarboxylique, en une quantité comprise dans la plage allant de 0,05 à 1,0 mole par mole du dianhydride d'acide 3,3',4,4' diphényléther tétracarboxylique en présence d'un anhydride phtalique en une quantité comprise dans la plage allant de 0,001 à 1,0 mole par mole de la diamine, et l'acide polyamique résultant est imidisé thermiquement ou chimiquement.

7. Procédé selon la revendication 6, dans lequel la diamine est du 4,4' diaminodiphényle éther et le dianhydride d'acide tétracarboxylique est un mélange obtenu par un mélange de dianhydride pyromellitique avec un dianhydride d'acide 3,3',4,4' diphényléthertétracarboxylique.

8. Procédé selon la revendication 7, dans lequel la diamine et le 3,4' diaminodiphényle éther et le dianhydride d'acide tétracarboxylique est un mélange obtenu par un mélange de dianhydride pyromellitique avec un dianhydride d'acide 3,3',4,4' diphényléthertétracarboxilique.
